# EUROPÄISCHE PATENTSCHRIFT

(11) **EP 3 022 017 B1**
(45) Veröffentlichungstag und Bekanntmachung des Hinweises auf die Patenterteilung: **05.09.2018**
(21) Anmeldenummer: 14744483.0
(22) Anmeldetag: 15.07.2014
(51) Int. Cl.: B25C 1/00, B25C 1/08

(54) **STEUERUNGSVERFAHREN UND HANDWERKZEUGMASCHINE**
CONTROL METHOD AND HAND TOOL MACHINE
PROCÉDÉ DE COMMANDE ET MACHINE-OUTIL MANUELLE

(30) Priorität: 16.07.2013 EP 13176598
(43) Veröffentlichungstag der Anmeldung: 25.05.2016
(73) Patentinhaber: Hilti Aktiengesellschaft, 9494 Schaan (LI)
(72) Erfinder: RAGGL, Klaus, CH-8050 Zürich (CH); BOEHM, Christoph, CH-9473 Gams (CH)
(74) Vertreter: Hilti Aktiengesellschaft Corporate Intellectual Property
(86) Internationale Anmeldenummer: PCT/EP2014/065079
(87) Internationale Veröffentlichungsnummer: WO 2015/007705

(56) Entgegenhaltungen:
- WO-A1-2005/063449
- WO-A1-2013/053002
- US-A1- 2004 045 997
- US-A1- 2004 134 961
- US-A1- 2007 059 186
- US-A1- 2007 108 249
- US-A1- 2010 108 736

## Beschreibung

### GEBIET DER ERFINDUNG

Die vorliegende Erfindung betrifft eine handgehaltende Werkzeugmaschine, wie sie unter Anderem beispielsweise aus US 2010/108736 A oder US 2004/134961 A bekannt sind. Eine Brennkammer mit einem Kolben wird mit Luft und einem brennbaren Gas gefüllt. Das Gasgemisch wird gezündet, worauf die Verbrennungsgase den Kolben beschleunigen. Die Bewegungsenergie des Kolbens wird genutzt, einen Nagel in ein Werkstück zu treiben. Ein Kolbenkompressor verdichtet die Luft und speist diese in ein Reservoir ein. Die Brennkammer wird aus dem Reservoir gespeist. Der erhöhte Luftdruck ermöglicht in einer kleineren Brennkammer die gleiche Luftmenge für die Verbrennung einzuspeisen. Allerdings führen der zusätzliche Kompressor und die für ihn benötigte Energiequelle zu einem erhöhten Gewicht und Größe des Setzgeräts.

### OFFENBARUNG DER ERFINDUNG

Die erfindungsgemäße Handwerkzeugmaschine zum Setzen eines Nagels hat einen von einem Anwender betätigbaren Taster zum Auslösen eines Setzens des Nagels. Eine Brennkammer ist vorgesehen, in welcher ein Gemisch aus brennbaren Gas und Luft zündbar ist. Ein Kolben ist in der Brennkammer beweglich angeordnet, um von den Verbrennungsgasen in Setzrichtung beschleunigt zu werden. Der Kolben hat einen in Setzrichtung von dem Kolben vorstehenden Stempel zum Vortreiben des Nagels. Ein Kompressor verdichtet die Luft in der Brennkammer vor dem Zünden, auf das mindestens 1,3-fache des Umgebungsdrucks. Der Kompressor hat ein Lüfterrad und einen Elektromotor. Bei einer Betriebsdrehzahl des Elektromotors weist das Lüfterrad eine Drehzahl von wenigstens 2.000 Umdrehungen pro Sekunde auf. Eine Gerätesteuerung beschleunigt den Elektromotor ansprechend auf das Betätigen des Tasters auf die Betriebsdrehzahl.
Die Verwendung des Kompressors mit dem sehr schnell drehenden Lüfterrad erweist sich als vorteilhaft, um das Gesamtgewicht der Handwerkzeugmaschine zu verringern. Das zusätzliche Gewicht für den Kompressor einschließlich der Stromversorgung für den Elektromotor wird durch die verkleinerte Brennkammer kompensiert. Die Drehzahl von Elektromotor und Lüfterrad sind gleich, wenn zweckmäßigerweise das Lüfterrad auf die Rotorwelle des Elektromotor aufgesetzt ist.
Eine Ausgestaltung sieht vor, dass das Lüfterrad mit einem Umlauf weniger als 5 ccm, z.B. weniger als 2 ccm, und vorzugsweise mehr als 0,5 ccm fördert, insbesondere in die Brennkammer. Das Lüfterrad ist vorzugsweise ein Radiallüfter, welcher insbesondere die Luft in radialer Richtung ausbläst. Der Radiallüfter ist bedingt durch seine Größe und Aufbau zwar nicht in der Lage einen hohen Druckunterschied aufzubauen, jedoch einen großen Luftstrom zu fördern.

Eine Ausgestaltung sieht vor, dass der Kompressor den Druck in der Brennkammer bis maximal auf das 3,5-fache des Umgebungsdrucks erhöht. Für eine zu erreichende Kompression [K] ist die Betriebsdrehzahl [D] in Umdrehungen pro Sekunde wenigstens D = 6.700 (K - 1).
Der Kompressor ist vorzugsweise erst in Betrieb, wenn ein Setzen des Nagels zu erwarten ist. Sobald ein Sicherheitsmechanismus der Handwerkzeugmaschine betätigt ist, ist der Elektromotor des Kompressors eingeschaltet. Der Kompressor ist ausgeschaltet bevor der Sicherheitsmechanismus betätigt und nachdem das Zünden erfolgt ist.
Ein Steuerungsverfahren für eine Handwerkzeugmaschine zum Setzen von Nägeln, wobei die Handwerkzeugmaschine eine Brennkammer, einen Kompressor mit einem Lüfterrad und einem Elektromotor, und einen vom Anwender betätigbaren Taster aufweist, sieht folgende Schritte vor. Der Elektromotor wird auf eine Betriebsdrehzahl von mehr 2.000 Umdrehungen pro Sekunde beschleunigt, sobald der Anwender den Taster betätigt. Hierbei wird der Druck in der Brennkammer auf einen Solldruck von wenigstens dem 1,3-fachen des Umgebungsdrucks erhöht. Das Volumen der Brennkammer ist vorzugsweise zwischen 200 ccm und 500 ccm groß. Das Lüfterrad hat eine Förderleistung von weniger als 5 ccm pro Umdrehung. Ein brennbares Gas wird in die Brennkammer eingespritzt. Das Einspritzen kann erfolgen, kurz bevor der Solldruck erreicht ist. Das Gemisch aus Luft und brennbarem Gas wird gezündet, sobald der Solldruck in der Brennkammer erreicht ist. Der Solldruck kann unmittelbar bestimmt oder über eine Zeitsteuerung ermittelt werden. Mit dem Zünden, d.h. dem Erreichen des Solldrucks wird der Elektromotor ausgeschaltet.
Eine Ausgestaltung sieht vor, dass die Gerätesteuerung den Elektromotor aus dem Stillstand auf wenigstens 75 % der Betriebsdrehzahl beschleunigt, wenn ein Sicherheitsmechanismus betätigt wird. Der Elektromotor wird auf die Betriebsdrehzahl beschleunigt, wenn nach dem Sicherheitsmechanismus der Taster betätigt wird.

Eine Ausgestaltung sieht vor, dass die Handwerkzeugmaschine die Temperatur der Umgebung ermittelt und basierend auf der Temperatur die Betriebsdrehzahl einstellt. Mit geringerer Temperatur wird eine kleinere Betriebsdrehzahl gewählt. Abhängig von der Betriebsdrehzahl stellt sich die Kompression in der Brennkammer ein.

Eine Ausgestaltung sieht vor, dass die Handwerkzeugmaschine einen Stellelement zum Einstellen einer Setzenergie durch den Anwender aufweist. Die Betriebszahl wird in Abhängigkeit der eingestellten Setzenergie festgesetzt, ebenso wird die in die Brennkammer einzuspritzende Menge brennbaren Gases in Abhängigkeit der eingestellten Setzenergie festgelegt. Der erreichte Druck und damit die Menge von Sauerstoff in der Brennkammer kann durch die Betriebszahl eingestellt werden. Das Mischungsverhältnis kann somit für eine optimale Verbrennung beibehalten oder eingestellt werden, im Gegensatz zu einer alleinigen Anpassung der Menge brennbaren Gases.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: ein Setzgerät für Nägel
- Fig. 2: ein Steuerungsdiagramm für das Setzgerät,
- Fig. 3: ein Verlauf der Drehzahl eines Kompressors,
- Fig. 4: ein Verlauf der Strom bzw. Leistungsaufnahme eines Elektromotors,
- Fig. 5: ein Blockdiagramm einer Motorsteuerung für den Elektromotor

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

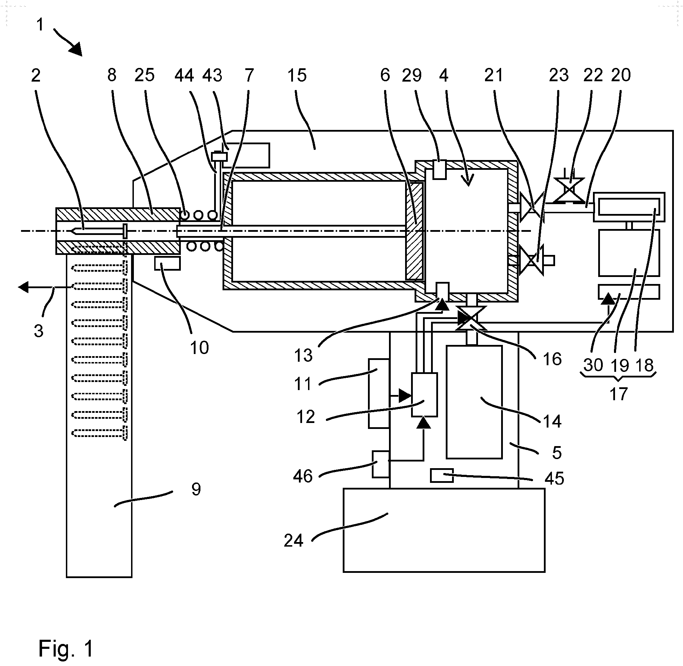

Fig. 1 zeigt als Beispiel einer handgehaltenen Werkzeugmaschine schematisch ein brennkraftgetriebenes Setzgerät **1** für Nägel **2.** Das Setzgerät **1** drückt den Nagel **2** in Setzrichtung **3** in ein Werkstück. Die hierfür notwendige Energie wird durch Verbrennen eines Gasgemisches in einer Brennkammer **4** des Setzgeräts **1** bereitgestellt. Der Anwender kann das Setzgerät **1** während des Betriebs, d.h. beim Setzen der Nägel **2,** mittels eines Handgriffs **5** halten und führen. Das Setzgerät **1** ist hierfür entsprechend kompakt und leicht aufgebaut.

Die Brennkammer **4** ist in Setzrichtung **3** durch einen Kolben **6** abgeschlossen, der parallel zu der Setzrichtung **3** beweglich ist. Der Kolben **6** wird durch die sich ausdehnenden Verbrennungsgase in Setzrichtung **3** beschleunigt. Der Kolben **6** ist mit einem Stempel **7** versehen, welcher in einen Lauf **8** hineinragt. Ein Nagel **2** kann in den Lauf **8** eingelegt werden, einzeln per Hand oder automatisiert durch ein Magazin **9.** Der mit dem Kolben **6** bewegte Stempel **7** drückt den Nagel **2** aus dem Lauf **8** heraus, in das Werkstück hinein.

Den Setzvorgang löst der Anwender durch Betätigen eines Sicherheitstasters **10** und eines Auslösetasters **11** aus. Eine Gerätesteuerung **12** befüllt ansprechend auf das Betätigen die Brennkammer **4** mit dem Gasgemisch und zündet das Gasgemisch mittels eines Zünders **13** in der Brennkammer **4.**

Das Gasgemisch setzt sich aus einem brennbaren Gas und Luft zusammen. Das brennbare Gas enthält vorzugsweise leichtflüchtige, kurzkettige Kohlenwasserstoffe. Das brennbare Gas wird vorzugsweise mittels einer Kartusche **14** bereitgestellt. Die Kartusche **14** ist in einer Aufnahme in dem Gehäuse **15** angeordnet. Die Kartusche **14** ist entnehmbar und gegen eine volle Kartusche **14** austauschbar oder die Kartusche **14** ist wiederbefüllbar. Ein steuerbares Dosierventil **16** ist zwischen der Kartusche **14** und der Brennkammer **4** angeordnet. Die Gerätesteuerung **12** öffnet und schließt das Dosierventil **16** und dosiert somit die Menge an brennbaren Gas, welche für einen Setzvorgang in die Brennkammer **4** eingespeist wird.

Die Brennkammer **4** wird durch einen Kompressor **17** aktiv mit Luft befüllt. Die Luft stellt den für die Verbrennung notwendigen Sauerstoff bereit. Der Kompressor **17** beinhaltet ein Lüfterrad **18** und einen bürstenlosen Elektromotor **19.** Das Lüfterrad **18** ist als Radiallüfter ausgelegt, welcher die Luft längs seiner Achse ansaugt und in radialer Richtung ausbläst. Das Lüfterrad **18** fördert mit einer Umdrehung weniger als 5 ccm, z.B. zwischen 0,5 ccm (Kubikzentimeter) und 2 ccm. Die Betriebsdrehzahl ist größer als 2.000 (zwei Tausend) Umdrehungen pro Sekunde (120.000 rpm), um einen Luftstrom zwischen 2.000 ccm und 10.000 ccm pro Sekunde zu erreichen.

Der Kompressor **17** speist die Brennkammer **4** direkt. Zwischen dem Kompressor **17** und der Brennkammer **4** ist kein Puffer angeordnet, welcher von dem Kompressor **17** aufgeladen würde, und aus welchem bei Bedarf die Brennkammer **4** befüllt würde. Ein durchgehender Kanal **20** beginnt an dem Kompressor **17** und endet an der Brennkammer **4.** Der Kanal **20** mündet in einem Einlassventil **21** der Brennkammer **4.** Das Einlassventil **21** ist von der Gerätesteuerung **12** gesteuert. Der Kanal **20** hat in der dargestellten Ausführungsform ein Bypassventil **22.** Der von dem Kompressor **17** erzeugte Luftstrom kann durch das geöffnete Bypassventil **22** in das Gehäuse **15,** d.h. in die Umgebung, abfließen. Die Gerätesteuerung **12** kann das Bypassventil **22** schließen, worauf der Luftstrom vollständig in die Brennkammer **4** strömt. Alternativ oder zusätzlich kann ein Bypassventil **23** in der Brennkammer **4** vorgesehen sein. Der Luftstrom fließt in die Brennkammer **4** ein, und kann durch das geöffnete Bypassventil **23** entweichen. Das Bypassventil **22, 23,** ggf. einschließlich weiterer Leitungen, ist ausgelegt, geöffnet einen Luftstrom von wenigstens 1000 ccm pro Sekunde in die Umgebung abzuleisten.

Der Elektromotor **19** des Kompressors **17** wird aus einer Batterie **24** gespeist. Die Batterie **24** enthält vorzugsweise Batteriezellen auf Basis eine Lithium-Ionen Technologie. Die Batterie **24** kann neben der Brennkammer **4** und dem Kompressor **17** dauerhaft in dem Gehäuse **15** angeordnet sein, alternativ kann die Batterie **24** abnehmbar an dem Gehäuse **15** befestigt sein.

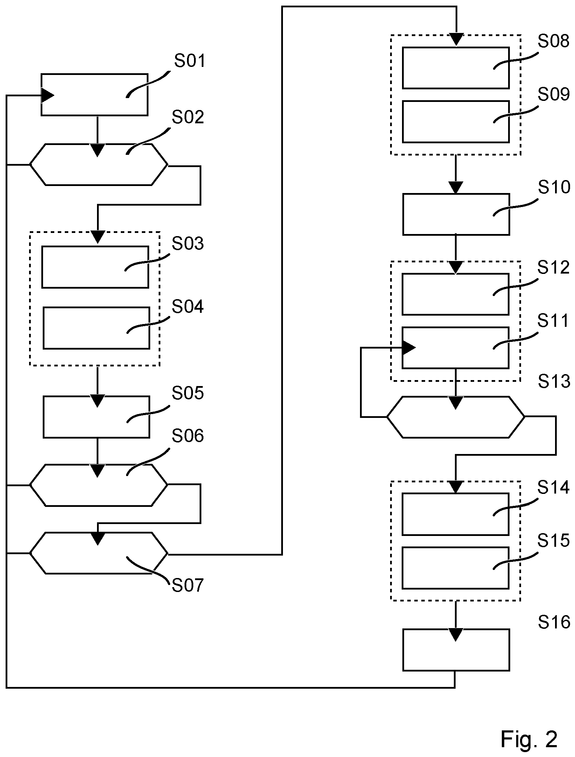

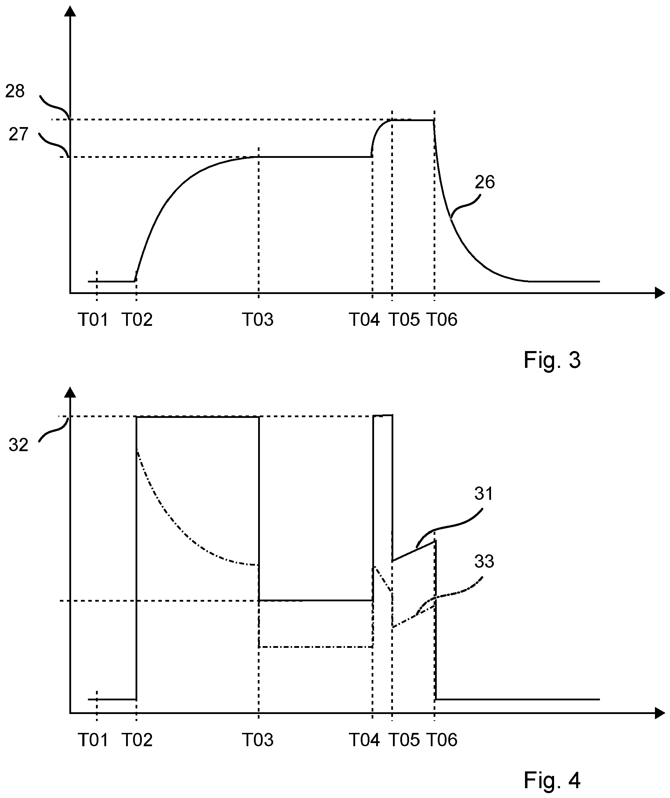

Der Setzvorgang wird mit Verweis auf das Steuerungsschema in Fig. 2 und den Zeitverlauf in Fig. 3 erläutert. Das Setzgerät **1** ist anfänglich **T01** in einem Ruhezustand **S01.** Die Brennkammer **4** ist entlüftet, in der Brennkammer **4** befindet sich im Wesentlichen nur Luft unter Umgebungsdruck. Der Kompressor **17** ist abgeschaltet und fördert keine Luft. Der Kolben **6** ist vorzugsweise in seiner das Volumen der Brennkammer **4** minimierenden Ausgangsstellung.

Der Anwender drückt den Lauf **8** gegen das Werkstück. Der beispielhafte Lauf **8** ist gegen eine Feder **25** in das Gehäuse **15** verschiebbar. Der Sicherheitstaster **10** wird dabei betätigt **T02.** Die Gerätesteuerung **12** prüft fortlaufend **S02,** ob der Sicherheitstaster **10** betätigt gehalten ist. Sollte der Anwender den Sicherheitstaster **10** lösen, indem das Setzgerät **1** nicht mehr an das Werkstück angepresst wird, unterbricht die Gerätesteuerung **12** den Setzvorgang und überführt das Setzgerät **1** in seinen Ruhezustand **S01.**

Ansprechend auf das Betätigen des Sicherheitstasters **10** wird der Kompressor **17** eingeschaltet **S03.** Die Drehzahl **26** des Elektromotors **19** wird von anfänglich Null auf einen Zwischenwert **27** beschleunigt. Der Zwischenwert **27** liegt beispielsweise über 2 500 Umdrehungen pro Sekunde. Der Zwischenwert **27** liegt vorzugsweise zwischen 50 % und 90 % der Betriebsdrehzahl **28.** Die Gerätesteuerung **12** öffnet **S04** das Bypassventil **22, 23** vorzugsweise zu Beginn oder während des Beschleunigens auf den Zwischenwert **27.** Das Einlassventil **21** der Brennkammer **4** kann dabei geöffnet sein. Falls das Bypassventil **23** in der Brennkammer **4** angeordnet ist, wird das Einlassventil **21** mit dem Bypassventil **23** geöffnet. Nach Erreichen T03 des Zwischenwerts **27,** hält der Elektromotor **19** die Drehzahl **26** bei S05. Die Bypassventile **22, 23** bleiben vollständig geöffnet. Die Gerätesteuerung **12** wartet S06 auf das Betätigen des Auslösetasters **11.** Falls der Auslösetaster **11** nicht innerhalb einer vorgegebenen Dauer nach dem Betätigen T02 des Sicherheitstasters **10** erfolgt, wird der Kompressor **17** abgeschaltet. Das Setzgerät 1 kehrt in den Ruhezustand S01 zurück.

Der Anwender betätigt nach dem Sicherheitstaster **10** den Auslösetaster **11** (**T04**). Die Gerätesteuerung **12** prüft S07, ob der Sicherheitstaster **10** nach wie vor betätigt ist, andernfalls wird der Setzvorgang abgebrochen. Ansprechend auf den betätigten Sicherheitstaster **10** beschleunigt **S08** der Kompressor **17** auf seine Betriebsdrehzahl **28.** Die Betriebsdrehzahl **28** ist größer als 2.000 Umdrehungen pro Sekunde (180.000 rpm). Die Förderleistung des Kompressors **17** erreicht einen Wert von 3 Liter pro Sekunde bis 10 Liter pro Sekunde.

Das Bypassventil **22** wird ansprechend auf das Betätigen des Auslösetasters **11** geschlossen **S09.** Das Schließen S09 erfolgt vorzugsweise mit Beginn T04 des Beschleunigens, kann auch während des Beschleunigens oder bei Erreichen T05 der Betriebsdrehzahl **28** erfolgen. Der Luftstrom fließt nun vollständig in die Brennkammer **4** ein. Die Brennkammer **4** ist nicht hermetisch dicht abgeschlossen, sondern ermöglicht einen Abfluss zwischen 0,3 und 0,8 Liter pro Sekunde. Beispielsweise kann das Bypassventil **23** offen bleiben oder nur teilweise geschlossen werden. Der winzige Radiallüfter kann nur einen geringen statischen Druckunterschied aufbauen. Die Funktionsweise erfordert permanent einen hohen Luftstrom, auch wenn der Solldruck im Wesentlichen bereits erreicht ist. Der Druck in der Brennkammer **4** erhöht sich aufgrund des höheren Zuflusses als Abflusses auf einen Sollwert zwischen 1,3 und 3,5. Der Sollwert (Kompression) ist einheitslos als Druckverhältnis der Luft in der Brennkammer **4** zu der Umgebung angegeben. Die Kompression wird durch die Gerätesteuerung **12** vorgegeben. Die Gerätesteuerung **12** ermittelt die Kompression basierend auf der Umgebungstemperatur und dem Umgebungsdruck. Die Gerätesteuerung **12** ermittelt **S10** eine Dauer (Zeitpunkt **T06**), welche der Kompressor **17** benötigt, um die Kompression in der Brennkammer **4** zu erreichen. Bis dahin wird der Kompressor **17** mit der Betriebsdrehzahl **28** betrieben **S11.**

Nachdem die Bypassventile **22, 23** geschlossen sind, wird das brennbare Gas in die Brennkammer **4** eingespritzt **S12.** Die Menge des brennbaren Gases ermittelt die Gerätesteuerung **12** basierend auf der Umgebungstemperatur und dem Umgebungsdruck. Die Menge brennbaren Gases und die Menge der Luft sind aufeinander abgestimmt, um eine gewünschte Setzenergie zu erreichen. Der Zeitpunkt für das Einspritzen des brennbaren Gases ist auf die Verwendung des Typs des Bypassventils **22, 23** abgestimmt. Bei dem Bypassventil **23** hinter der Brennkammer **4** erweist es sich als vorteilhaft, das brennbare Gas erst kurz vor Erreichen der Kompression in die Brennkammer **4** einzuspritzen. Der Druck in der Brennkammer **4** sollte beispielsweise mehr als 75 % des Solldrucks bereits erreicht haben. Bei dem Bypassventil vor der Brennkammer **4** erweist es sich als vorteilhaft, das brennbare Gas frühzeitig einzuspeisen, wenn im Wesentlichen noch kein Druck in der Brennkammer **4** aufgebaut ist. Die Brennkammer **4** ist nicht druckdicht ausgelegt. Ein Luftstrom aus der Brennkammer **4** ist erwünscht, da der schnelldrehende Kompressor **17** einen permanenten Luftstrom benötigt. Jedoch soll dabei nicht das kostbare Brenngas mit ausgespült werden. Allerdings soll das brennbare Gas vor Erreichen der Kompression eingespeist sein. Mit Schließen des Einlassventils **21** fällt der Druck rasch ab, beispielsweise wenigstens 0,1 bar pro 100 ms (Millisekunden).

Sobald die Gerätesteuerung **12** ermittelt S13, dass die Dauer verstrichen T06 ist, d.h. der Solldruck erreicht ist, wird das Einlassventil **21** geschlossen **S14** und der Kompressor **17** abgeschaltet **S15.** Alternativ oder zusätzlich kann ein Drucksensor **29** in der Brennkammer **4** vorgesehen sein, der das Erreichen der Kompression ermittelt.

Sobald das Einlassventil **21** geschlossen ist T06, wird das brennbare Gas gezündet **S16.** Die Gerätesteuerung **12** übermittelt ein entsprechendes Steuersignal an den Zünder **13.** Die Dauer **T04-T06** zwischen dem Betätigen des Auslösetasters **11** durch den Anwender und dem Zünden **S15** liegt im Bereich von 50 ms bis 150 ms. Die Dauer **T04-T06** ist in Hinblick auf Sicherheitserfordernisse kurz gewählt. Der Anwender sollte in dieser Zeit nicht in der Lage sein, das Setzgerät **1** von dem Werkstück abzuheben. Der Kolben **6** wird wie beschrieben beschleunigt und treibt den Nagel **2** in das Werkstück. Das Erkalten der Verbrennungsgase führt zu einem Unterdruck in der Brennkammer **4,** was den Kolben **6** in seine Ausgangsstellung zurückzieht. Das Einlassventil **21** ist dabei geschlossen, ebenso das Bypassventil **23.**

Der Kompressor **17** und die Batterie **24** für die Versorgung des Kompressors **17** sind zusätzliche Komponenten, welche mit ihrem Gewicht zu dem Gesamtgewicht des Setzgeräts **1** beitragen. Die Kompression der Luft ermöglicht jedoch die Brennkammer **4** kleiner auszulegen, da in dem geringeren Volumen die gleiche Sauerstoffmenge eingebracht wird. Das Volumen und Gewicht der Brennkammer **4** kann reduziert werden. Die effektive Gewichtsreduktion ist wohl nur für ein Kompressionsverhältnis zwischen 1,3 und 3,5 realisierbar. Die Gewichtsänderung der Brennkammer **4** für ein Kompressionsverhältnis von weniger als 1,3 wiegt die zusätzlichen Komponenten noch nicht auf. Ein Kompressionsverhältnis von mehr als 3,5 ermöglicht zwar eine sehr leichte Brennkammer **4,** jedoch wird der Vorteil durch Gewicht des Kompressors oder Probleme mit der Dauerfestigkeit des Kompressors aufgehoben. Mit einer Kompression zwischen 1,3 und 3,5 kann eine Verringerung des Gesamtgewichts erreicht werden, wenn der Kompressor 17 mit einer hohen Drehzahl **26** und einem kleinen Radiallüfter ausgelegt wird. Die Drehzahl 26 soll über 2.000 Umdrehungen pro Sekunde liegen. Falls eine Kompression [K] von größer als 1,3 benötigt ist, ist eine Steigerung der Drehzahl [D] **26** von wenigstens jeweils 67 Umdrehungen pro Sekunde für jedes Prozentpunkt der Kompression erforderlich: D = 6.700 (K-1).

Der Elektromotor **19** wird von einem Batteriepaket **24** gespeist. Die hohen Beschleunigungswerte des Elektromotors **19** führen zu hohen Spitzenströmen, welche insbesondere gängige Batteriezellen basierend auf Lithium-Ionen Technologie erheblich belasten. Der Elektromotor **19** ist daher mit einer Motorsteuerung **30** versehen, welche die hohe Beschleunigung bei mäßiger Belastung des Batteriepakets **24** erreicht. Die Motorsteuerung **30** regelt die Leitungsaufnahme **31** des Elektromotors **19** während der Beschleunigungsphase auf eine Soll-Leistung **32** aus. Die Besonderheit der geregelten Leistungsaufnahme ist, dass anfänglich ein hoher Strom **33** in den noch ruhenden Elektromotor **19** eingespeist wird und der Strom **33** mit steigender Drehzahl des Elektromotors **19** verringert wird. Mit der Drehzahl **26** steigt die über dem Elektromotor **19** abfallende Spannung **34,** welche multipliziert mit dem Strom **33** die Leistungsaufnahme **31** definiert.

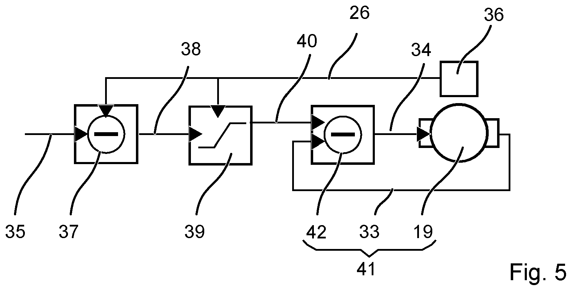

Die Motorsteuerung **30** regelt vorzugsweise die Drehzahl **26** des Elektromotors **19** auf einen Sollwert **35.** Der Sollwert **35** kann je nach Phase des Setzens der Zwischenwert **27** oder die Betriebsdrehzahl **28** sein. Die beispielhafte Motorsteuerung **30** ist in dem Blockschaltbild von Fig. 5 dargestellt. Der Elektromotor **19** ist mit einem Sensor **36** zum Bestimmen der aktuellen Ist-Drehzahl **26** versehen. Der Sensor **36** kann beispielsweise einen Hallsensor beinhalten oder die Drehzahl anhand der periodisch variierten induzierten Spannung in den Motorspulen bestimmen. Andere Sensoren, welche bei bürstenlosen Motoren gebräuchlich sind, können gleichfalls zur Anwendung kommen. Ein Komparator **37** vergleicht die Soll-Drehzahl **35** mit der Ist-Drehzahl **26** und gibt ein entsprechendes Stellsignal **38** aus. Das Stellsignal **38** ist ein Maß für den Strom, welcher in den Elektromotor **19** eingespeist werden soll. Ein Begrenzer **39** vergleicht das Stellsignal **38** mit einem zulässigen Grenzwert und verringert das Stellsignal **38** bei Überschreiten des Grenzwerts auf den Grenzwert. Das limitierte Stellsignal **40** wird einer Regelschleife **41** zugeführt, welche den Strom **33** in dem Elektromotor **19** mit einem Komparator **42** auf das limitierte Stellsignal **40** ausregelt. Die Regelschleife **41** kann beispielsweise die an dem Elektromotor **19** anliegende Spannung **34,** ein Pulsweitenverhältnis etc. zum Regeln des Stroms **33** verändern.

Die Drehzahlregelung der Motorsteuerung **30** ist durch ein Rückkopplung der Ist-Drehzahl **26** in den Begrenzer **39** um die Leistungsregelung beim Beschleunigen ergänzt. Während des Beschleunigens des Elektromotors **19** führt die noch große Abweichung der Ist-Drehzahl **26** von der Soll-Drehzahl **35,** dazu dass der Begrenzer **39** das Stellsignal **38** auf den Grenzwert limitiert. Der Begrenzer **39** stellt den Grenzwert [G] invers proportional zu der Ist-Drehzahl [D] **26** ein: G = a / D. Der Grenzwert ist anfänglich bei niedriger Ist-Drehzahl **26** hoch, wodurch gefordert von dem Stellsignal **38** ein entsprechend hoher Strom **33** in den Elektromotor **19** eingeprägt wird. Der höchste Strom **33** ergibt sich beim Beschleunigen aus der Ruhe heraus. Ein Proportionalitätsfaktor [a] ist vorzugsweise derart gewählt, dass beim Beschleunigen aus der Ruhe heraus, die maximal zulässige Leistung der Batterie **24** abgerufen wird. Der Proportionalitätsfaktor kann fest vorgegeben sein. Bevorzugt wird der Proportionalitätsfaktor in Abhängigkeit des Ladezustands der Batterie **24** bestimmt. Der Proportionalitätsfaktor wird mit fallendem Ladezustand verringert. Ferner kann der Proportionalitätsfaktor mit sinkender Umgebungstemperatur verringert werden. Mit steigender Ist-Drehzahl **26** verringert sich der Grenzwert und ebenso der in dem Elektromotor **19** fließende Strom **33.** Wenn der Elektromotor **19** die Soll-Drehzahl **35** erreicht hat, ist das Stellsignal **38** gering und nicht mehr durch den Grenzwert beeinflusst. Die Leistungsregelung ist nicht mehr aktiv.

Die Motorsteuerung **30** kann gleichermaßen für einen Motor **43** verwendet werden, der den Kolben **6** in der Brennkammer **4** entgegen der Setzrichtung **3** in die Grundstellung zurückführt. Der Motor **43** kann über ein Getriebe **44** mit dem Kolben **6** verbunden sein. Das Getriebe **44** hat vorzugsweise einen Freilauf, welcher bei einer Bewegung des Kolbens **6** in Setzrichtung **3** den Motor **43** abkoppelt.

Das Setzgerät **1** hat einen Temperatursensor **45,** um die Temperatur der Umgebung zu bestimmen. Die Gerätesteuerung **12** ermittelt basierend auf der Temperatur die Menge brennbaren Gases und die Menge von Luft, um den Nagel **2** mit der gewünschten Setzenergie zu setzen. Die Stütztabelle enthält für unterschiedliche Temperaturen und für unterschiedliche Setzenergien die zugehörigen Mengen brennbaren Gases und Luft bzw. Druck in der Brennkammer **4.** Die Kompression der Luft wird mit abnehmender Temperatur verringert, zudem wird die Menge brennbaren Gases in der Brennkammer **4** verringert.

Das Setzgerät **1** kann ein Stellelement **46** aufweisen, das dem Anwender ermöglicht die Setzenergie einzustellen. Eine Variation der Setzenergie ist beispielsweise vorteilhaft, um das Setzen in unterschiedlichen Untergrund zu optimieren oder das Setzen eines Nagels **2** mit einer weichen Unterlegscheibe aus Silikon zu ermöglichen. Die Gerätesteuerung **12** erfasst die eingestellte Setzenergie und bestimmt anhand von Tabellen die notwendige Menge brennbaren Gases und den in der Brennkammer **4** zu erreichenden Druck. Letzteres legt die Menge von Sauerstoff in der Brennkammer **4** fest. Die einzelnen Werte können durch Versuchsreihen vorab bestimmt und in einer Tabelle abgelegt sein. Die Motorsteuerung **30** passt vorzugsweise die Betriebsdrehzahl **28** in Abhängigkeit des zu erreichenden Drucks an, bei verringertem Druck ist eine geringere Drehzahl **26** ausreichend.

## Patentansprüche

1. Handwerkzeugmaschine (1) zum Setzen eines Nagels (2) mit:
einem von einem Anwender betätigbaren Taster (11) zum Auslösen eines Setzens des Nagels (2);
einer Brennkammer (4), in welcher ein Gemisch aus brennbaren Gas und Luft zündbar ist;
einem Kolben (6), der in der Brennkammer (4) von Verbrennungsgasen in Setzrichtung (3) bewegbar angeordnet ist;
einem an dem Kolben (6) angeordneten Stempel (7) zum Vortreiben des Nagels (2); einem Kompressor (17) zum Verdichten der Luft in der Brennkammer (4) vor dem Zünden, **dadurch gekennzeichnet, dass**
der Kompressor (17) den Druck in der Brennkammer (4) auf das mindestens 1,3-fache des Umgebungsdrucks erhöht und ein Lüfterrad (18) und einen Elektromotor (19) aufweist, wobei bei einer Betriebsdrehzahl (28) des Elektromotors (19) das Lüfterrad (18) eine Drehzahl (26) von wenigstens 2.000 Umdrehungen pro Sekunde aufweist.

2. Handwerkzeugmaschine (1) nach einem der vorhergehenden Ansprüche, **dadurch gekennzeichnet, dass** das Lüfterrad (18) ein Volumen von weniger als 5 ccm pro Umdrehung fördert.

3. Handwerkzeugmaschine (1) nach einem der vorhergehenden Ansprüche, **dadurch gekennzeichnet, dass** der Kompressor (17) den Druck in der Brennkammer (4) auf das höchstens 3,5-fache des Umgebungsdrucks erhöht.

4. Handwerkzeugmaschine (1) nach Anspruch 3, **dadurch gekennzeichnet, dass** für eine zu erreichende Kompression [K] die Betriebsdrehzahl [D] (28) in Umdrehungen pro Sekunde wenigstens D = 6.700 (K - 1) ist.

5. Handwerkzeugmaschine (1) nach einem der vorhergehenden Ansprüche, **dadurch gekennzeichnet, dass** der Elektromotor (19) mit Betätigen des Tasters (11) auf die Betriebsdrehzahl (28) beschleunigt ist.

6. Handwerkzeugmaschine (1) nach einem der vorhergehenden Ansprüche, **dadurch gekennzeichnet, dass** der Elektromotor (19) nach dem Zünden des brennbaren Gases ausgeschaltet ist.

7. Handwerkzeugmaschine (1) nach einem der vorhergehenden Ansprüche, **gekennzeichnet durch** einen Sicherheitsmechanismus (10) und der Elektromotor (19) ansprechend auf das Betätigen des Sicherheitsmechanismus (10) eingeschaltet ist.

8. Handwerkzeugmaschine (1) nach einem der vorhergehenden Ansprüche, ein Kanal (20) den Kompressor (17) unmittelbar mit der Brennkammer (4) verbindet,

9. Steuerungsverfahren für eine Handwerkzeugmaschine (1) zum Setzen von Nägeln, die eine Brennkammer (4), einen Kompressor (17) mit einem Lüfterrad (18) und einem Elektromotor (19), und einen vom Anwender betätigbaren Taster (11) aufweist, mit folgenden Schritten:
Beschleunigen des Elektromotors (19) auf eine Betriebsdrehzahl (28) von mehr 2.000 Umdrehungen pro Sekunde, sobald der Anwender den Taster (11) betätigt, um den Druck in der Brennkammer (4) auf einen Solldruck von wenigstens dem 1,3-fachen des Umgebungsdrucks zu erhöhen,
Einspeisen eines brennbaren Gases in die Brennkammer (4),
Zünden des Gemisches aus Luft und brennbaren Gases, sobald der Solldruck in der Brennkammer (4) erreicht ist, und Ausschalten des Elektromotors (19), sobald der Solldruck in der Brennkammer (4) erreicht ist.

10. Steuerungsverfahren für eine Handwerkzeugmaschine (1) nach Anspruch 9, **dadurch gekennzeichnet, dass** die Gerätesteuerung (12) den Elektromotor (19) aus dem Stillstand auf wenigstens 75 % der Betriebsdrehzahl (28) beschleunigt, wenn ein Sicherheitsmechanismus (10) betätigt wird, und den Elektromotor (19) auf die Betriebsdrehzahl (28) beschleunigt, wenn nach dem Sicherheitsmechanismus (10) der Taster (11) betätigt wird.

11. Steuerungsverfahren nach einem der Ansprüche 9 oder 10, **dadurch gekennzeichnet, dass** die Handwerkzeugmaschine (1) die Temperatur der Umgebung ermittelt und basierend auf der Temperatur die Betriebsdrehzahl (28) einstellt.

12. Steuerungsverfahren nach einem der Ansprüche 9, 10 oder 11, **dadurch gekennzeichnet, dass** die Handwerkzeugmaschine (1) einen Stellelement (46) zum Einstellen einer Setzenergie durch den Anwender aufweist, und die Betriebszahl (28) in Abhängigkeit der eingestellten Setzenergie und eine in die Brennkammer (4) einzuspritzende Menge brennbaren Gases in Abhängigkeit der eingestellten Setzenergie festgelegt werden.

## Claims

1. Hand-held power tool (1) for setting a nail (2), comprising:
a switch (11) that can be actuated by a user to trigger the setting of the nail (2);
a combustion chamber (4) in which a mixture of combustible gas and air can be ignited;
a piston (6) arranged in the combustion chamber (4) in such a manner that it can be moved in the setting direction (3) by combustion gases;
a plunger (7) arranged on the piston (6) for driving the nail (2), and
a compressor (17) for compressing the air in the combustion chamber (4) prior to ignition,
**characterised in that**
the compressor (17) increases the pressure in the combustion chamber (4) to at least 1.3 times the ambient pressure and has a fan wheel (18) and an electric motor (19), the fan wheel (18) having a speed (26) of at least 2000 revolutions per second at the operating speed (28) of the electric motor (19).

2. Hand-held power tool (1) according to one of the preceding claims, **characterised in that** the fan wheel (18) delivers a volume of less than 5 cm³ per revolution.

3. Hand-held power tool (1) according to one of the preceding claims, **characterised in that** the compressor (17) increases the pressure in the combustion chamber (4) to at most 3.5 times the ambient pressure.

4. Hand-held power tool (1) according to claim 3, **characterised in that**, for the compression [K] to be achieved, the operating speed [D] (28) in revolutions per second is at least D = 6700 (K - 1).

5. Hand-held power tool (1) according to one of the preceding claims, **characterised in that** the electric motor (19) is accelerated to the operating speed (28) upon actuation of the switch (11).

6. Hand-held power tool (1) according to one of the preceding claims, **characterised in that** the electric motor (19) is switched off after the ignition of the combustible gas.

7. Hand-held power tool (1) according to one of the preceding claims, **characterised by** a safety mechanism (10) and **characterised in that** the electric motor (19) is switched on in response to the actuation of the safety mechanism (10).

8. Hand-held power tool (1) according to one of the preceding claims, [...] a duct (20) connects the compressor (17) directly to the combustion chamber (4).

9. Control method for a hand-held power tool (1) for setting nails having a combustion chamber (4), a compressor (17) comprising a fan wheel (18) and an electric motor (19), and a switch (11) that can be actuated by the user, comprising the following steps:
accelerating the electric motor (19) to an operating speed (28) of more than 2000 revolutions per second as soon as the user actuates the switch (11) in order to increase the pressure in the combustion chamber (4) to a desired pressure of at least 1.3 times the ambient pressure,
feeding a combustible gas into the combustion chamber (4),
igniting the mixture of air and combustible gas as soon as the desired pressure has been reached in the combustion chamber (4) and
switching off the electric motor (19) as soon as the desired pressure has been reached in the combustion chamber (4).

10. Control method for a hand-held power tool (1) according to claim 9, **characterised in that** the tool controller (12) accelerates the electric motor (19) from the idle state to at least 75 % of the operating speed (28) if a safety mechanism (10) is actuated and accelerates the electric motor (19) to the operating speed (28) if the switch (11) is actuated after the safety mechanism (10).

11. Control method according to either of claims 9 or 10, **characterised in that** the hand-held power tool (1) determines the temperature of the surroundings and adjusts the operating speed (28) on the basis of the temperature.

12. Control method according to one of claims 9, 10 or 11, **characterised in that** the hand-held power tool (1) has a control element (46) for adjustment of the setting energy by the user and the operating speed (28) and the quantity of combustible gas to be injected into the combustion chamber (4) are determined as a function of the adjusted setting energy.

## Revendications

1. Machine-outil manuelle (1) pour la pose d'un clou (2), comportant :
un bouton-poussoir (11) actionnable par un utilisateur pour déclencher une pose du clou (2),
une chambre de combustion (4), dans laquelle un mélange constitué d'un gaz combustible et d'air peut être enflammé,
un piston (6) qui est agencé dans la chambre de combustion (4) de manière à pouvoir être déplacé dans une direction de pose par des gaz de combustion,
un poinçon (7) agencé sur le piston (6) pour pousser le clou (2),
un compresseur (17) pour comprimer l'air dans la chambre de combustion (4) avant l'inflammation, **caractérisée en ce que**
le compresseur (17) augmente la pression dans la chambre de combustion (4) jusqu'à au moins 1,3 fois la pression ambiante, et comporte une roue de ventilateur (18) et un moteur électrique (19), dans laquelle la roue de ventilateur (18) a une vitesse de rotation (26) d'au moins 2 000 tours par seconde à une vitesse de fonctionnement (28) du moteur électrique (19).

2. Machine-outil manuelle (1) selon l'une des revendications précédentes, **caractérisée en ce que** la roue de ventilateur (18) délivre un volume inférieur à 5 cm³ par tour.

3. Machine-outil manuelle (1) selon l'une des revendications précédentes, **caractérisée en ce que** le compresseur (17) augmente la pression dans la chambre de combustion (4) jusqu'à au plus 3,5 fois la pression ambiante.

4. Machine-outil manuelle (1) selon la revendication 3, **caractérisée en ce que** pour une compression [K] à atteindre, la vitesse de fonctionnement [D] (28) en tours par seconde est au moins égale à D = 6 700 (K - 1).

5. Machine-outil manuelle (1) selon l'une des revendications précédentes, **caractérisée en ce que** le moteur électrique (19) est accéléré en actionnant le bouton-poussoir (11) jusqu'à la vitesse de fonctionnement (28) .

6. Machine-outil manuelle (1) selon l'une des revendications précédentes, **caractérisée en ce que** le moteur électrique (19) est mis hors tension après l'inflammation du gaz combustible.

7. Machine-outil manuelle (1) selon l'une des revendications précédentes, **caractérisée par** un mécanisme de sécurité (10) et le moteur électrique (19) est mis en marche en réponse à l'actionnement du mécanisme de sécurité (10).

8. Machine-outil manuelle (1) selon l'une des revendications précédentes, dans laquelle un canal (20) relie directement le compresseur (17) à la chambre de combustion (4).

9. Procédé de commande pour une machine-outil manuelle (1) pour la pose de clous, qui comporte une chambre de combustion (4), un compresseur (17) ayant une roue de ventilateur (18) et un moteur électrique (19), et un bouton-poussoir (11) actionnable par l'utilisateur, comportant les étapes suivantes consistant à :
accélérer le moteur électrique (19) jusqu'à une vitesse de fonctionnement (28) supérieure à 2 000 tours par seconde, dès que l'utilisateur actionne le bouton-poussoir (11) afin d'augmenter la pression dans la chambre de combustion (4) jusqu'à une pression de consignes au moins égale à 1,3 fois la pression ambiante,
délivrer un gaz combustible dans la chambre de combustion (4),
enflammer le mélange constitué d'air et de gaz combustible, dès que la pression de consigne dans la chambre de combustion (4) est atteinte, et mettre hors tension le moteur électrique (19) dès que la pression de consigne dans la chambre de combustion (4) est atteinte.

10. Procédé de commande pour une machine-outil manuelle (1) selon la revendication 9, **caractérisé en ce que** la commande d'appareil (12) accélère le moteur électrique (19) à partir de l'arrêt jusqu'à au moins 75 % de la vitesse de fonctionnement (28) lorsqu'un mécanisme de sécurité (10) est actionné, et accélère le moteur électrique (19) jusqu'à la vitesse de fonctionnement (28) lorsque le bouton-poussoir (11) est actionné après le mécanisme de sécurité (10).

11. Procédé de commande selon l'une des revendications 9 ou 10, **caractérisé en ce que** la machine-outil manuelle (1) détermine la température de l'environnement et règle la vitesse de fonctionnement (28) sur la base de la température.

12. Procédé de commande selon l'une des revendications 9, 10 ou 11, **caractérisé en ce que** la machine-outil manuelle (1) comporte un élément de réglage (46) pour régler une énergie de pose par l'utilisateur, et la vitesse de fonctionnement (28) est déterminée en fonction de l'énergie de pose réglée et une quantité de gaz de combustible à injecter dans la chambre de combustion (4) est déterminée en fonction de l'énergie de pose réglée.
